# EUROPEAN PATENT APPLICATION

(11) **EP 4 111 869 A1**
(43) Date of publication of application: **04.01.2023**
(21) Application number: 21183372.8
(22) Date of filing: 02.07.2021
(51) Int. Cl.: A23L 9/20, A23C 20/02, A23L 11/00, A23L 11/45, A23L 15/00, A23L 29/212

(54) **A VEGAN FORMULATION AND A VEGAN FOOD PRODUCT**

(71) Applicant: Orkla Foods Sverige AB, 203 13 Malmö (SE)
(72) Inventor: HÅKANSSON, Karolina, 268 72 Teckomatorp (SE); DAHLBERG, Sofia, 222 41 Lund (SE)
(74) Representative: Zacco Sweden AB

(57) **Abstract**

The present invention relates to a vegan formulation for use in food products, comprising a mixture of 15-60 wt % of water, 3-20 wt % of pulse protein powder or pulse flour, 1-6 wt % of a thickener, 15-60 wt % of tofu. The present invention also relates to a vegan food product comprising such a vegan formulation.

## Description

### TECHNICAL FIELD

The present disclosure relates to a vegan formulation for use in food products. The present disclosure also relates to a vegan food product comprising such a vegan formulation.

### BACKGROUND ART

In large scale food producing industries, there is a large variety of different types of ready-made food products which consumers can quickly heat at home in a regular oven or in a microwave oven. Such food products may for example include meat or fish, or be vegetarian or vegan. As is well known, vegan food has no ingredients derived from animals, not even egg or milk. Although individual consumers may have different reasons for selecting vegan food, there is no doubt that vegan food products is constantly gaining in popularity.

A challenge for food producers when developing vegan food products is not only to provide a high quality product from a nutritional aspect, but to also provide a product which is visually appealing and has a nice taste and texture.

An example of a popular ready-made food product is Quiche Lorraine, which is a classic French pie with ham and cheese and a creamy savoury custard. A *savoury custard* is normally egg-based, similarly to *sweet custard* (such as the common vanilla flavoured sweet custard). When trying to make a vegan alternative to Quiche Lorraine, neither the pie crust, nor the ham and cheese substitutes cause any considerable difficulties in creating the desired appearance, flavours, texture, etc. However, when it comes to providing a vegan substitute to the savoury custard, it has been a challenge to achieve a satisfactory result. Some vegan substitutes to the normally egg-based savoury custard have been found to work well during the actual preparation and production in the factory where the pie is cooked and then frozen for possible distribution to stores, supermarkets, cafes, etc. However, when the frozen pie is reheated in a microwave oven, the vegan savoury custard substitute melts and loses its desired texture. An example of such a known vegan substitute includes the following ingredients: flour (chickpea, corn, rice), vegetable proteins (faba bean, mung bean, pea), gelling agent: E407a (contains stabilizer: E508), thickener: E461, sea salt. These ingredients are mixed with a combination of oil and water to receive the final vegan savoury custard. Another example has the following ingredients: E461, E407, mod. starch, oat flour, coconut oil, dried glucose syrup, E477, E471, vegetable protein, salt. These ingredients are also mixed with a combination of oil and water to receive the final vegan savoury custard. The above mentioned E-numbers in the two examples are also known as: E407a - processed eucheuma seaweed (less processed form of carrageenan); E407 - carrageenan; E508 - Potassium chloride; E461 - Methyl cellulose; E477 - Propylene glycol esters of fatty acids (emulsifier); E471 - Mono- and diglycerides of fatty acids (emulsifier).

In view of the drawbacks of the prior art, it would thus be desirable to provide a vegan formulation which can be used as a substitute to savoury custard and which keeps its desired texture when reheated in a microwave oven.

### DISCLOSURE OF THE INVENTION

An object of the present disclosure is to provide a vegan formulation which may be used as a substitute for regular egg-based savoury custard and which at least partly mitigates the drawbacks of the prior art. This and other objects, which will become apparent, in the following, are accomplished by a vegan formulation as defined in claim 1. Exemplary embodiments are presented in the dependent claims.

The general inventive concept is based on the realization that a mixture of tofu, pulse protein powder or pulse flour, and a thickener and some water, provides a good starting point for making a vegan savoury custard.

Thus, according to a first aspect of the present inventive concept, there is provided a vegan formulation for use in food products, comprising a mixture of:
a) 15-60 wt % of water,
b) 3-20 wt % of pulse protein powder or pulse flour,
c) 1-6 wt % of a thickener,
d) 15-60 wt % of tofu.

By providing a mixture of the above ingredients a formulation is obtained which when reheated keeps its desired texture and provides a good vegan substitute for regular egg-based savoury custard. Although the tofu has a gel structure that contributes to an egg-like experience, it is too watery by itself to be recognized as "egg". The pulse protein powder or pulse flour is gelling and gives a consistency when heated which also contributes to an egg-like structure. The combination of these two ingredients will not by themselves result in a solution that can be recognized as an adequate substitute for a traditional egg-based savoury custard. But these ingredients together with thickener (and some water) provides an excellent mixture for a vegan formulation having the desired stable consistency/texture when reheated in a microwave oven. The thickener binds the water and provides consistency.

The relative amounts (by weight) between these four ingredients may vary. For instance, there are different types of tofu, such as firm tofu and soft tofu, which have varying inherent water-content. Thus, if using a tofu having a relatively high water content, it would be suitably to add less amount of extra water, compared to when using a tofu having a relatively low water content. Therefore, it should be understood that in some exemplary embodiments the amount of added water may be lower than the amount of tofu while in other exemplary embodiments the amount of added water may be higher than then amount of tofu. For instance, the amount of water may be as low as 0.75 or even 0.5 times the amount of tofu. On the other hand the amount of water may in other cases be much higher, for example 2.5 times the amount of tofu.

The above four ingredients, may suitably make up at least 50 wt % of all the ingredients in the formulation, for example at least 60 wt % of all the ingredients in the formulation, such as at least 70 wt % of all the ingredients in the formulation.

Furthermore, since there are also other consistency-forming ingredients (the thickener and the pulse protein powder or pulse flour), the additional water may also be adapted to the amount of these other consistency-forming ingredients. The thickener may suitably be a starch, such as maize starch, however, other consistency-forming starches or modified starches are also conceivable, as long as they provide an appropriate thickening effect, in particular during heating.

Nevertheless, without being bound to a specific relation between the above listed four ingredients, the drawbacks of melting at reheating in a microwave oven is mitigated by a vegan formulation according to the general inventive concept disclosed herein, which provides for a stable texture upon such reheating.

The following exemplary embodiments present some preferred ranges. According to at least one exemplary embodiment, the weight percentage of the tofu is 15-50 wt %, suitably 17-35 wt %. According to at least one exemplary embodiment, the weight percentage of the pulse protein powder or pulse flour is 3-15 wt %, suitably 5-13 wt %. According to at least one exemplary embodiment, the weight percentage of the thickener is 1-5 wt %, suitably 1-3.5 wt %.

As mentioned above, different types of tofu may be used. According to at least one exemplary embodiment, the tofu is one of more of the tofu in the group consisting of:
- soft tofu, such as silken tofu,
- pressed firm tofu.

While soft tofu has a natural soft texture which has been found particularly advantageous for use in a formulation for a vegan substitute for traditional egg-based savoury custard, the inventors have found that by using pressed firm tofu, similar advantageous properties can be obtained as for soft tofu. Firm tofu may suitably be placed in a mixer and be processed (mixed) so that its consistency becomes smooth, before dosing an appropriate amount for mixed with the other ingredients of the vegan formulation. Silken tofu is particularly advantageous as it has an ivory colour which contributes to providing the desired visual appearance.

To further improve the visual appearance further ingredients may be added. According to at least one exemplary embodiment, the mixture in the vegan formulation also comprises plant-based cream or milk, such as coconut cream or coconut milk. This provides for a white base colour which contributes in providing an appealing visual appearance in the final product. Furthermore, in addition to a white base colour, it may also contribute with creaminess and a smooth mouthfeel. These benefits are at least partly due to its saturated fat content.

It should be understood that although various different pulse protein powders and pulse flours can be used for providing the desired stable consistency/texture upon reheating in microwave oven, it has been found particularly advantageous to use yellow lentil protein concentrate to obtain the overall egg-like light-yellowish colour, which comes from a combination of the yellow lentil protein concentrate, the white colour of the plant-based cream or milk (such a coconut cream) and the ivory silken tofu. Upon baking the formulation gets a nice golden brownish colour, very much like traditional egg-based savoury custard. Although the just mentioned example provides a visually appealing appearance, it should be understood that in some products, in which the visual appearance may be of less importance, other pulse protein powders/flours can be used, and the plant-based cream may be omitted, while still obtaining a vegan formulation which provides the desired stable texture after reheating and which can therefore replace traditional egg-based savoury custard.

As mentioned above, a plant-based cream or milk may suitably be used as an ingredient in the mixture. There may be other ingredients as well. This is reflected in at least the following exemplary embodiment.

According to at least one exemplary embodiment, the vegan formulation further comprises at least one of:
3-20 wt % of vegetable oil,
4-20 wt % of plant-based cream or milk,
2-10 wt % of a stabilizing mixture,
0.3-2 wt % of salt (NaCI).

The vegetable oil may be included in order to obtain a creaminess of the vegan savoury custard. It replaces the fat from the cream in traditional egg-based savoury custard. In some exemplary embodiments, however, it would be conceivable to only use plant-based cream (such as coconut cream) instead of the vegetable oil. This together with emulsifiers in the stabilizing mixture may together form a satisfactory emulsion.

The weight percentage of the vegetable oil may preferably be 5-15 wt %, suitably 6-13 wt %. Some vegetable oils have a neutral taste, while others have a more characteristic taste. This may be one example of a consideration when choosing a specific vegetable oil. For instance, according to at least one exemplary embodiment, the vegetable oil is one or more of the vegetable oils in the group consisting of:
- rapeseed oil,
- sunflower oil,
- soybean oil.

In preferred exemplary embodiments, the weight percentage of the plant-based cream or milk is 5-15 wt %, such as 6-13 wt %.

In addition to the above mentioned salt, there may be included one or more flavorants.

The stabilizing mixture may be included in order to keep an emulsion in the savoury custard. This provides for a creaminess and a good mouthfeel.

There are various conceivable stabilizing mixtures which provide such effect. According to at least one exemplary embodiment, the stabilizing mixture comprises a combination of one or more of:
- vegetable oil, such as coconut oil,
- propylene glycol esters of fatty acids,
- mono- and diglycerides of fatty acids,
- lecithin, and
- plant-based protein, such as pea protein.

The propylene glycol esters of fatty acids, the mono- and diglycerides of fatty acids, the lecithin (which is naturally present in e.g. eggs and soybeans), and the plant-based protein have emulsifying properties. The vegetable oil in the stabilizing mixture is not needed for the actual emulsifying/stabilizing effect, but may function as a carrier in the stabilizing mixture.

As mentioned above, yellow lentils, may suitably be selected in order to provide the vegan formulation with a yellowish colour. Thus, according to at least one exemplary embodiment, the pulse protein powder or pulse flour comprises lentil protein concentrate based on yellow lentils. However, for solving the problem of inadequate texture of vegan formulations upon reheating in a microwave oven, other options are also conceivable. This is reflected in the following exemplary embodiment, according to which the pulse protein powder or pulse flour is one or more of the pulse concentrates in the group consisting of:
- lentil protein concentrate,
- soy protein concentrate,
- chickpea protein concentrate,
- pea protein concentrate.

Thus, according to a second aspect of the present inventive concept, there is provided a vegan food product comprising a vegan formulation according to the first aspect, including any embodiment thereof. The advantages of the vegan food product of the second aspect largely correspond to those of the vegan formulation of the first aspect, including any embodiment thereof.

The vegan food product may, in at least some exemplary embodiments, be a pie, such as a Quiche Lorraine style pie. However, it should be understood that the vegan formulation may be used in other vegan food products as well, in which a vegan substitute for traditional egg-based savoury custard is desired. Other implementations of the vegan formulation may, for example, be to simply cook it using a frying pan for making an omelette or other egg-type food.

The invention will now be described in greater detail with reference to the following examples which describes the ingredients of a vegan formulation according to an exemplary embodiment of the invention and a method of preparation.

### Example

In the following example,
- as pulse protein powder or pulse flour, lentil protein concentrate is used, suitably based on yellow lentils;
- as tofu, silken tofu is used;
- as thickener, maiz starch is used;

Furthermore, vegetable oil in the form of rapeseed oil is included; plant based cream in the form of coconut cream is included, and a stabilizing mixture of coconut oil propylene glycol esters of fatty acids (E477), mono- and diglycerides of fatty acids (E471) and pea protein is included; and salt is included.

Ingredients:

| **Raw materials - Vegan Savoury custard** | **%** |
|---|---|
| Water | 40,0% |
| Rapeseed oil | 10,0% |
| Lentil protein concentrate | 10,0% |
| Maize starch | 2,7% |
| Silken Tofu | 23,0% |
| Salt | 1,0% |
| Coconut cream | 10,0% |
| Coconut oil | 2,0% |
| Propylene glycol esters of fatty acids (E477) | 0,5% |
| Mono- and diglycerides of fatty acids (E471) | 0,3% |
| Pea Protein | 0,5% |
| | |
| Totalt | 100,00% |

Method of preparation:
1. Half of the water is poured into a bowl. The lentil protein concentrate, the coconut oil, the propylene glycol esters, the mono- and diglycerides, and the pea protein are added. These ingredients are mixed with a low shear speed.
2. During mixing, rapeseed oil is slowly added and mixing continues for a minute or two after the rapeseed oil has been added.
3. Maize starch, silken tofu, salt and coconut cream is added and mixed until an even mixture is achieved. If there are still lumps after 2 minutes of mixing, the mixture is allowed to rest for 15 minutes before the next step.
4. The rest of the water is added and then mixed for 1 minute on low speed.
5. The mixture is allowed to rest for 15 minutes. Then the mixture is mixed for half a minute at low speed.

If the vegan formulation, prepared as exemplified above, is to be used in a pie, it can then be poured into a pie crust and baked in an oven, after which it may be frozen packed and distributed for sale to consumers. The frozen pie can be reheated in a microwave oven and the vegan formulation will retain a texture after the reheating which texture resembles baked traditional egg-based savoury custard. The above example also has the additional advantage of the presenting a appealing nice golden brownish colour.

An exemplary composition of a vegan quiche which includes the vegan formulation of the general inventive concept may be as follows:
- Pie crust (dough, unbaked), 35 wt %
- Vegan formulation (vegan savoury custard), 45 wt %
- Vegetables and/or other types of filling, 20 wt %

The vegan formulation of the general inventive concept, such as the exemplary embodiments described herein, and variations thereof, may be prepared by conventional procedures well known in the field of consumer foods. It will be appreciated that the vegan formulation may be varied according to well-known food preparation and food technology technics to accommodate differing amounts and types of active ingredient, as well as desired consumer experience. For example, flavorants may be added to provide a certain flavour, such as a smokey, spicy, fruity, etc. flavours. It should furthermore be noted that the specific ingredients and proportions in the above Example are for illustrative purposes. Ingredients may be exchanged for suitable equivalents and proportions may be varied, according to the desired properties of the formulation of interest, within the scope of the accompanying independent claim.

### Description of figures

The accompanying figures shows three different photos.

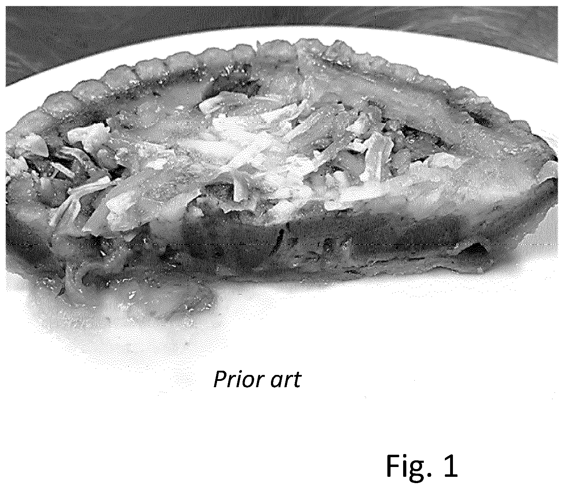

Fig. 1 shows a photo of a pie filled with a prior art vegan savoury custard in accordance with the first example presented in the background section of the present disclosure. The photo is taken after the frozen pie has been reheated in a microwave oven and cut in half. As can be clearly seen in the photo, the savoury custard has melted upon reheating and has poured out onto the plate.

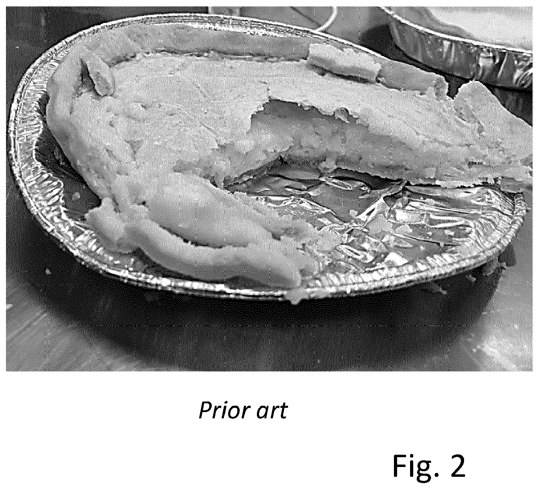

Fig. 2 shows a photo of a pie filled with another prior art vegan savoury custard in accordance with the second example presented in the background section of the present disclosure. The photo shows that after reheating, the custard's surface has formed an unappealing "lid" which is not recognized on traditional egg-based savoury custards. The rest of the custard has melted during the reheating in the microwave oven and the jelly (egg-like) texture/structure is completely disrupted. Apart from the "surface-lid", its texture is now similar to very light-baked or non-baked mud cake.

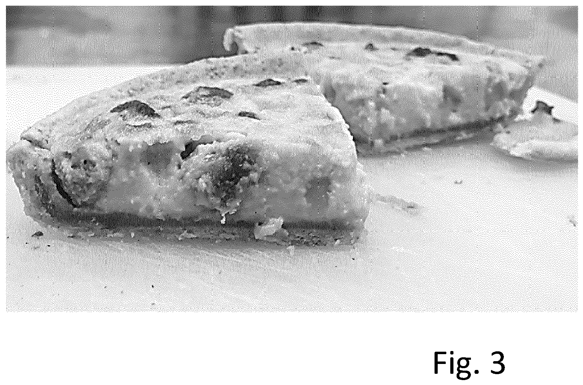

Fig. 3 shows a photo of a pie filled with a savoury custard according to the vegan formulation of the present inventive disclosure. As can be seen, after reheating in the microwave oven the savoury custard has kept its texture, without melting. The pie in the photo also includes vegan substitutes for ham and cheese, and thus represents a vegan Quiche Lorraine.

## Claims

1. A vegan formulation for use in food products, comprising a mixture of:
a) 15-60 wt % of water,
b) 3-20 wt % of pulse protein powder or pulse flour,
c) 1-6 wt % of a thickener,
d) 15-60 wt % of tofu.

2. The vegan formulation as claimed in claim 1, further comprising at least one of:
3-20 wt % of vegetable oil,
4-20 wt % of plant-based cream or milk,
2-10 wt % of a stabilizing mixture,
0.3-2 wt % of salt (NaCI).

3. The vegan formulation as claimed in any one of claims 1-2, wherein the tofu is one or more of the tofu in the group consisting of:
- soft tofu, such as silken tofu,
- pressed firm tofu.

4. The vegan formulation as claimed in any one of claims 1-2, wherein the weight percentage of the tofu is 15-50 wt %, suitably 17-35 wt %.

5. The vegan formulation as claimed in any one of claims 1-4, wherein the pulse protein powder or pulse flour is one or more of the pulse concentrates in the group consisting of:
- lentil protein concentrate,
- soy protein concentrate,
- chickpea protein concentrate,
- pea protein concentrate.

6. The vegan formulation as claimed in claim 5, wherein the pulse protein powder or pulse flour comprises lentil protein concentrate based on yellow lentils.

7. The vegan formulation as claimed in any one of claims 1-6, wherein the weight percentage of the pulse protein powder or pulse flour is 3-15 wt %, suitably 5-13 wt %.

8. The vegan formulation as claimed in claim 2 or any one of claims 3-7 when dependent on claim 2, wherein the vegetable oil is one or more of the vegetable oils in the group consisting of:
- rapeseed oil,
- sunflower oil,
- soybean oil.

9. The vegan formulation as claimed in claim 2 or any one of claims 3-8 when dependent on claim 2, wherein the weight percentage of the vegetable oil is 5-15 wt %, suitably 6-13 wt %.

10. The vegan formulation as claimed in any one of claims 1-9, wherein the thickener is a starch, such as maize starch.

11. The vegan formulation as claimed in any one of claims 1-10, wherein the weight percentage of the thickener is 1-5 wt %, suitably 1-3.5 wt %.

12. The vegan formulation as claimed in 2 or any one of claims 3-11 when dependent on claim 2, wherein the plant-based cream or milk is coconut cream or coconut milk.

13. The vegan formulation as claimed in 2 or any one of claims 3-12 when dependent on claim 2, wherein the weight percentage of the plant-based cream or milk is 5-15 wt %, suitably 6-13 wt %.

14. The vegan formulation as claimed in claim 2 or any one of claims 3-13 when dependent on claim 2, wherein the stabilizing mixture comprises a combination of one or more of:
- vegetable oil, such as coconut oil,
- propylene glycol esters of fatty acids,
- mono- and diglycerides of fatty acids,
- lecithin, and
- plant-based protein, such as pea protein.

15. A vegan food product comprising a vegan formulation as claimed in any one of claims 1-14.
